# EUROPEAN PATENT APPLICATION

(11) **EP 4 768 290 A1**
(43) Date of publication of application: **01.07.2026**
(21) Application number: 25223214.5
(22) Date of filing: 15.12.2025
(51) Int. Cl.: B60J 1/20, G06F 1/16

(54) **SLIDING SCREEN ASSEMBLY, AUTOMOTIVE SEAT, AUTOMOTIVE SUNROOF, AND AUTOMOBILE**

(30) Priority: 27.12.2024 CN 202423272738 U
(71) Applicant: AUMOVIO Germany GmbH, 60488 Frankfurt am Main (DE)
(72) Inventor: Zhang, Gaolei, Wuhu, Anhui, 241009 (CN); Xu, Mingyuan, Wuhu, Anhui Province, 241009 (CN); Ji, Yuanfeng, Wuhu, Anhui, 241009 (CN)
(74) Representative: Aumovio Corporation

(57) **Abstract**

The present application discloses a sliding screen assembly, including: a winding unit (10); a flexible screen (20) wound on the winding unit, the flexible screen being provided with a free end (30); a support plate (40) hinged to the free end, the support plate being configured to support the flexible screen unwound by the winding unit; a fixed base (50); and a sliding link mechanism (60) having one end slidably connected to the fixed base and the other end hinged to the support plate; where the sliding link mechanism slides in forward and reverse drive the support plate to move in forward and reverse directions, thereby driving the winding unit to unwind and rewind the flexible screen, so that the flexible screen is deployed and retracted.

The present application further discloses an automotive seat, an automotive sunroof, and an automobile.

## Description

### Technical Field

The present application relates to the field of automobile technologies, and in particular, to a sliding screen assembly, an automotive seat, an automotive sunroof, and an automobile.

### Background

In the consumer electronics industry, there are assemblies or devices for deploying or retracting flexible screens, but these assemblies or devices are usually arranged in upper space of the flexible screens. Driven or moved by these assemblies or devices, the flexible screens are deployed from top to bottom and retracted from bottom to top. A deploying and retracting mechanism of a projection screen is an example.

There is no space above automobile interiors such as a dashboard, and therefore, there is currently no effective layout plan for a flexible screen. In order to deploy within a complex and limited space of a dashboard, an existing flexible screen often needs to be transferred from a back side of the dashboard to an upper side of the dashboard, and then slide down from the upper side for deployment, resulting in complex motion trajectories of the flexible screen. Furthermore, existing flexible screens are usually made of flexible materials such as plastic or thin glass. These materials may not be comparable to traditional hard glass in physical strength, and therefore the strength of flexible screens is low.

### Summary

The present application proposes a sliding screen assembly for solving the above problems.

In a first aspect, an implementation of the present application discloses a sliding screen assembly, including: a winding unit; a flexible screen wound on the winding unit, the flexible screen being provided with a free end; a support plate hinged to the free end, the support plate being configured to support the flexible screen unwound by the winding unit; a fixed base; and a sliding link mechanism having one end slidably connected to the fixed base and the other end hinged to the support plate; where the sliding link mechanism slides in forward and reverse directions to drive the support plate to move in forward and reverse directions, thereby driving the winding unit to unwind and rewind the flexible screen, so that the flexible screen is deployed and retracted.

With the above technical solution, since the flexible screen is hinged to the support plate, when the sliding link mechanism slides in the forward and reverse directions to drive the support plate to move in the forward and reverse directions, the flexible screen also moves relative to the support plate. When the flexible screen is deployed, the flexible screen fits against the support plate, and the support plate provides a supporting force to the flexible screen, thereby enhancing strength of the flexible screen and preventing collapse of the flexible screen that affects a screen display effect. In the present application, the flexible screen can be deployed and retracted by the movement of the sliding link mechanism, and the structure is simple. The sliding screen assembly also does not require guide tracks for deploying and retracting the flexible screen, thus features a simple and elegant appearance.

Optionally, the fixed base includes a sliding panel, and the sliding panel is provided with a first sliding slot and a second sliding slot. The sliding link mechanism includes a link part and a sliding part, the link part includes a first link, the sliding part includes a first slider, a connecting arm, and a second slider, where two ends of the connecting arm are fixedly connected to the first slider and the second slider respectively; one end of the first link is fixedly connected to the second slider, and the other end of the first link is hinged to the support plate; the first slider is located in the first sliding slot and slidable along the first sliding slot, and the second slider is located in the second sliding slot and slidable along the second sliding slot, and through forward and reverse sliding of the first slider in the first sliding slot and the second slider in the second sliding slot, the first link drives the support plate to move in the forward and reverse directions.

Optionally, the first sliding slot is arc-shaped and recessed forward, the second sliding slot is located behind the first sliding slot and is in the shape of an oblique line, and an included angle formed by a direction from bottom to top of the second sliding slot and a direction from rear to front of the sliding screen assembly is an acute angle.

Optionally, the sliding screen assembly includes a second link, the second link having one end hinged to the fixed base and the other end hinged to the support plate. The forward and reverse sliding of the sliding link mechanism and forward and reverse rotation of the second link drive the support plate to move in the forward and reverse directions, thereby driving the flexible screen to first move along an arc trajectory and then along an approximately linear trajectory when deployed, and the flexible screen to first move along an approximately linear trajectory and then along an arc trajectory when retracted.

Optionally, the other end of the first link is hinged to a top of the support plate; and the other end of the second link is hinged to a bottom of the support plate.

Optionally, there are two sliding link mechanisms, and the two sliding link mechanisms are arranged in a first direction; there are two second links, and the two second links are arranged in a second direction; the first direction is parallel to the second direction; and the two first links are arranged between the two second links.

Optionally, the first link and the second link are arc-shaped and protrude in a direction away from the fixed base.

Optionally, the sliding screen assembly includes: a first synchronization rod, where two ends of the first synchronization rod are connected to the first sliders on the two sliding link mechanisms respectively; and a second synchronization rod, where two ends of the second synchronization rod are connected to the second sliders on the two sliding link mechanisms respectively.

Optionally, the sliding screen assembly includes: a plurality of supporting and guiding rolling elements distributed along part of the motion trajectory of the flexible screen, and configured to support the flexible screen and guide the flexible screen to move in the forward and reverse directions.

Optionally, the sliding screen assembly includes a drive unit, where the drive unit is connected to the first synchronization rod and is configured to drive the first synchronization rod to move, thereby driving the first slider to slide in the first sliding slot and the second slider to slide in the second sliding slot.

Optionally, the drive unit includes: a lead screw, one end of the lead screw being hinged to the fixed base; a lead screw nut sleeved on the lead screw and fixedly connected to the first synchronization rod; and a drive motor configured to drive the lead screw to rotate; where the rotation of the lead screw causes the lead screw nut to move on the lead screw, thereby driving the first synchronization rod to move.

In a second aspect, an implementation of the present application discloses an automotive seat, including the sliding screen assembly according to any one of aforementioned embodiments in the first aspect.

In a third aspect, an implementation of the present application discloses an automotive sunroof, including the sliding screen assembly according to any one of aforementioned embodiments in the first aspect.

In a fourth aspect, an implementation of the present application discloses an automobile, including a hidden portion configured to hide the sliding screen assembly according to any one of aforementioned embodiments in the first aspect. The hidden portion includes: an opening; an accommodating cavity, where the sliding screen assembly is accommodated in the accommodating cavity, when the flexible screen is deployed, the sliding screen assembly extends from the accommodating cavity through the opening, and when the flexible screen is retracted, the sliding screen assembly is retracted into the accommodating cavity through the opening; and a cover plate capable of covering and opening the opening.

### Brief Description of Drawings

FIG. 1 shows a first perspective view of a sliding screen assembly according to an embodiment of the present application;
FIG. 2 shows a first side view of a sliding screen assembly according to an embodiment of the present application;
FIG. 3 shows a second perspective view of a sliding screen assembly according to an embodiment of the present application;
FIG. 4 shows a second side view of a sliding screen assembly according to an embodiment of the present application;
FIG. 5 shows a third perspective view of a sliding screen assembly according to an embodiment of the present application; and
FIG. 6 shows a third side view of a sliding screen assembly according to an embodiment of the present application.

### Detailed Description

The following describes implementations of the present application through specific embodiments. Those skilled in the art can easily understand other advantages and effects of the present application from contents disclosed in this specification. Although the description of the present application will be introduced in conjunction with a preferred embodiment, it does not mean that features of the present application are limited to this implementation. On the contrary, the purpose of introducing the present application in conjunction with the implementation is to cover other options or modifications that may be extended based on the claims of the present application. In order to provide a deeper understanding of the present application, the following description includes many specific details. The present application can also be implemented without these details. Furthermore, in order to avoid confusion or blurring key points of the present application, some specific details will be omitted from the description. It should be explained that where no conflict arises, embodiments in the present application may be combined, and features in embodiments may be combined.

It should be noted that in this specification, similar reference numerals and letters denote similar items in the following drawings, and therefore, once an item is defined in one drawing, it does not need to be further defined or explained in subsequent drawings.

In addition, terms such as "first" and "second" are merely used for descriptive purposes, and must not be interpreted as indicating or implying relative importance.

In the description of this embodiment, it should be further noted that, unless otherwise clearly specified and defined, terms such as "arrange", "connected", and "connect" should be interpreted in a broad sense, for example, they may indicate a fixed connection, or a removable connection, or an integral connection; they may indicate a mechanical connection, or an electrical connection; they may indicate a direct connection, or an indirect connection via an intermediate medium, or internal communication between two elements. Those of ordinary skill in the art can interpret the specific meaning of the above-mentioned terms in this embodiment according to particular circumstances.

In order to make the purpose, technical solutions, and advantages of the present application clearer, implementations of the present application will be described in further detail below with reference to the accompanying drawings.

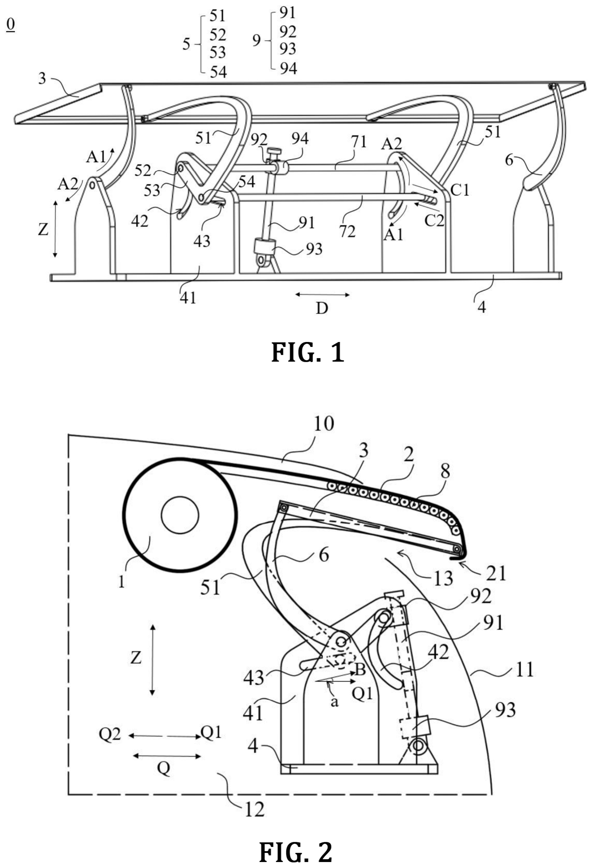

FIG. 1 shows a perspective view of some components (a support plate 3, a fixed base 4, a sliding panel 41, a first sliding slot 42, a second sliding slot 43, a sliding link mechanism 5, a second link 6, a first synchronization rod 71, a second synchronization rod 72, and a drive unit 9) in a sliding screen assembly 0 according to the present application when a flexible screen 2 is retracted. FIG. 2 shows a side view of the sliding screen assembly 0 according to the present application when the flexible screen 2 is retracted.

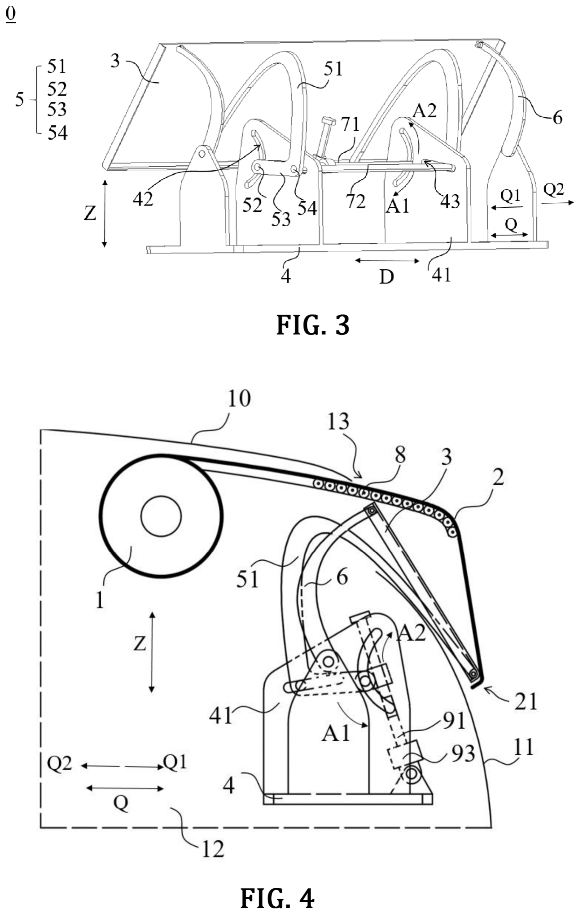

FIG. 3 shows a perspective view of some components (the support plate 3, the fixed base 4, the sliding panel 41, the first sliding slot 42, the second sliding slot 43, the sliding link mechanism 5, the second link 6, the first synchronization rod 71, the second synchronization rod 72, and the drive unit 9) in the sliding screen assembly 0 according to the present application when the flexible screen is in an intermediate state in retracting and deploying processes. FIG. 4 shows a side view of the sliding screen assembly 0 according to the present application when the flexible screen is in the intermediate state in the retracting and deploying processes.

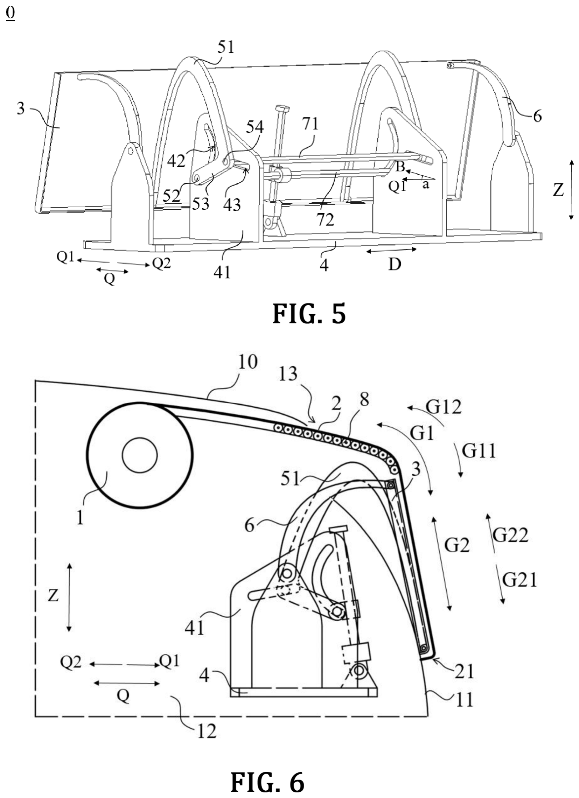

FIG. 5 shows a perspective view of some components (the support plate 3, the fixed base 4, the sliding panel 41, the first sliding slot 42, the second sliding slot 43, the sliding link mechanism 5, the second link 6, the first synchronization rod 71, the second synchronization rod 72, and the drive unit 9) in the sliding screen assembly 0 according to the present application when the flexible screen 2 is deployed. FIG. 6 shows a side view of the sliding screen assembly 0 according to the present application when the flexible screen 2 is deployed.

In a first aspect, referring to FIG. 1 to FIG. 6, an implementation of the present application discloses a sliding screen assembly 0, including a winding unit 1, a flexible screen 2, a support plate 3, a fixed base 4, and a sliding link mechanism 5.

Referring to FIG. 2, FIG. 4, and FIG. 6, the flexible screen 2 is wound on the winding unit 1, and the flexible screen 2 is provided with a free end 21. The support plate 3 is hinged to the free end 21, and the support plate 3 is configured to support the flexible screen 2 unwound by the winding unit 1 (as shown in FIG. 6).

Referring to FIG. 1 to FIG. 6, the sliding link mechanism 5 has one end slidably connected to the fixed base 4 and the other end hinged to the support plate 3. The sliding link mechanism 5 slides in forward and reverse directions to drive the support plate 3 to move in forward and reverse directions, thereby driving the winding unit 1 to unwind and rewind the flexible screen 2, so that the flexible screen 2 is deployed and retracted.

Specifically, referring to FIG. 1 to FIG. 6, the sliding link mechanism 5 slides forward to drive the support plate 3 to move forward, that is, to drive the support plate 3 to move in a direction from a retracted position shown in FIG. 1 and FIG. 2 to an intermediate position shown in FIG. 3 and FIG. 4 and then to a deployed position shown in FIG. 5 and FIG. 6, thereby driving the winding unit 1 to unwind the flexible screen 2, so that the flexible screen 2 is deployed. Referring to FIG. 1 to FIG. 6, the sliding link mechanism 5 slides in reverse to drive the support plate 3 to move in reverse, that is, to drive the support plate 3 to move in a direction from the deployed position shown in FIG. 5 and FIG. 6 to the intermediate position shown in FIG. 3 and FIG. 4 and then to the retracted position shown in FIG. 1 and FIG. 2, thereby driving the winding unit 1 to rewind the flexible screen 2, so that the flexible screen 2 is retracted.

In this embodiment, one end of the flexible screen 2 is wound on the winding unit 1, and the other end is the free end 21. The free end 21 is hinged to the support plate 3. In the deploying and retracting processes of the flexible screen 2, the winding unit 1 provides a certain tensioning force to the flexible screen 2 to ensure that the flexible screen 2 is taut.

In some possible embodiments, the winding unit 1 is a roller. The roller is connected to a drive motor. The drive motor drives the roller to roll to rewind and unwind the flexible screen 2.

In some other possible embodiments, the winding unit 1 is a coil spring. The coil spring has an automatic reset function and can automatically rewind the flexible screen 2.

With the above technical solution, since the flexible screen 2 is hinged to the support plate 3, when the sliding link mechanism 5 slides in the forward and reverse directions to drive the support plate 3 to move in the forward and reverse directions, the flexible screen 2 also moves relative to the support plate 3. When the flexible screen 2 is deployed, the flexible screen 2 fits against the support plate 3, and the support plate 3 provides a supporting force to the flexible screen 2, thereby enhancing strength of the flexible screen 2 and preventing collapse of the flexible screen 2 that affects a screen display effect.

In the present application, the flexible screen 2 can be deployed and retracted by the movement of the sliding link mechanism 5, and the structure is simple. The sliding screen assembly 0 also does not require guide tracks for deploying and retracting the flexible screen 2, thus features a simple and elegant appearance.

In some possible embodiments provided by the present application, referring to FIG. 1, FIG. 3, and FIG. 5, the fixed base 4 includes a sliding panel 41. The sliding panel 41 is provided with a first sliding slot 42 and a second sliding slot 43.

The sliding link mechanism 5 includes a link part and a sliding part.

In some possible embodiments, the sliding link mechanism 5 is an integrally formed structure, that is, the link part and the sliding part are integrally formed.

The link part includes a first link 51, and the sliding part includes a first slider 52, a connecting arm 53, and a second slider 54. Two ends of the connecting arm 53 are fixedly connected to the first slider 52 and the second slider 54 respectively. One end of the first link 51 is fixedly connected to the second slider 54, and the other end of the first link 51 is hinged to the support plate 3.

The first slider 52 is located in the first sliding slot 42 and slidable along the first sliding slot 42. The second slider 54 is located in the second sliding slot 43 and slidable along the second sliding slot 43. Through forward and reverse sliding of the first slider 52 in the first sliding slot 42 and the second slider 54 in the second sliding slot 43, the first link 51 drives the support plate 3 to move in the forward and reverse directions.

In this embodiment, the first slider 52 and the second slider 54 may be cylindrical. The present application does not limit the shapes of the first slider 52 and the second slider 54, as long as the first slider 52 and the second slider 54 can slide in the first sliding slot 42 and the second sliding slot 43 respectively.

Since the first slider 52 and the second slider 54 can slide in the first sliding slot 42 and the second sliding slot 43 respectively, the support plate 3 can move according to a predetermined motion trajectory to meet user needs. The first slider 52 and the second slider 54 are in sliding fit with the first sliding slot 42 and the second sliding slot 43 respectively, so that the sliding screen assembly 0 can achieve a large range of motion in a small space through a sliding mechanism rather than a fixed mechanism (such as a fixed link mechanism, with one end of the link fixedly connected to the fixed base, and the other end fixedly connected to the support plate), which is suitable for application scenarios with limited space. Furthermore, the forward and reverse sliding of the first slider 52 and the second slider 54 can drive the support plate 3 to achieve bidirectional movement, thereby increasing motion flexibility of the mechanism of the sliding screen assembly 0 and being able to adapt to different operational requirements. In addition, the first slider 52 and the second slider 54 are fixedly connected through the connecting arm 53. This design maintains good structural rigidity of the sliding screen assembly 0 and also improves stability of the entire mechanism.

In some possible embodiments according to the present application, referring to FIG. 1 to FIG. 6, the first sliding slot 42 is arc-shaped and recessed forward. The second sliding slot 43 is located behind the first sliding slot 42 and is in the shape of an oblique line, and an included angle formed by a direction from bottom to top of the second sliding slot 43 and a direction from rear to front of the sliding screen assembly 0 is an acute angle a.

In this embodiment, the front-rear direction is a direction Q shown in FIG. 2 to FIG. 6, and the direction from rear to front is a direction Q1 shown in the figures, which is also a direction closer to the flexible screen 2 in the entire mechanism of the sliding screen assembly 0. The direction from front to rear is a direction Q2 shown in the figures, which is also a direction away from the flexible screen 2 in the entire mechanism of the sliding screen assembly 0.

The arc-shaped first sliding slot 42 enables the sliding link mechanism 5 to move in a comprehensive manner in vertical and horizontal directions, so as to drive the support plate 3 to achieve a large range of motion in a small space. Shape, position, and angle designs of the first sliding slot 42 and the second sliding slot 43 can affect the motion angle and motion trajectory of the support plate 3. This design enables the sliding screen assembly 0 to achieve multiple motion modes, such as translation and angle adjustment, thereby increasing the functionality of the assembly.

In this embodiment, referring to FIG. 1, the forward movement of the first slider 52 is movement in a direction A1 shown in the figure, and the reverse movement of the first slider 52 is movement in a direction A2 shown in the figure. Accordingly, the forward movement of the second slider 54 is a movement following the forward movement of the first slider 52. The reverse movement of the second slider 54 is a movement following the reverse movement of the first slider 52. At the same time, during the forward and reverse movements of the first slider 52 and the second slider 54, an extension direction of the connecting arm 53 is also changed to drive the support plate 3 to move according to a predetermined trajectory, thereby driving the winding unit 1 to unwind and rewind the flexible screen 2, so that the flexible screen 2 is deployed and retracted.

Specifically, as shown in FIG. 2, when the flexible screen 2 is retracted, the first slider 52 is located at a vertex of the first sliding slot 42, and the second slider 54 is located at a vertex of the second sliding slot 43. At this time, the connecting arm 53 is positioned above the second sliding slot 43, and an included angle between a direction of the connecting arm 53 from the second slider 54 toward the first slider 52 and the rear-to-front direction (i.e., the direction Q1), is an acute angle.

Referring to FIG. 1 and FIG. 2, when the first slider 52 moves from the vertex of the first sliding slot 42 in the forward direction (i.e., the direction A1), the second slider 54 also moves from the vertex of the second sliding slot 43 in a third direction (i.e., a direction C1 shown in FIG. 1).

Referring to FIG. 3 and FIG. 4, when the first slider 52 continues moving in the forward direction (i.e., the direction A1), and reaches a middle point of the first sliding slot 42 (i.e., a position corresponding to the maximum curvature of the first sliding slot 42), the second slider 54 moves to a lowest point of the second sliding slot 43 in the third direction (i.e., the direction C1 shown in FIG. 1). Referring to FIG. 4, at this point, the connecting arm 53 is positioned substantially parallel to the second sliding slot 43, and an included angle between the direction of the connecting arm 53 from the second slider 54 toward the first slider 52 and the rear-to-front direction (i.e., the direction Q1) is an acute angle, and the acute angle is the same as the included angle of the two shown in FIG. 2.

Referring to FIG. 5 and FIG. 6, when the first slider 52 continues moving in the forward direction (i.e., the direction A1), and reaches a lowest point of the first sliding slot 42, the second slider 54 moves in a fourth direction (i.e., a direction C2 shown in FIG. 1) to the vertex of the second sliding slot 43.

As shown in FIG. 6, when the flexible screen 2 is deployed, the first slider 52 is located at the lowest point of the first sliding slot 42, and the second slider 54 is located at the vertex of the second sliding slot 43. At this time, the connecting arm 53 is positioned below the second sliding slot 43, and an included angle between the direction of the connecting arm 53 from the second slider 54 toward the first slider 52 and the rear-to-front direction (i.e., the direction Q1) is an acute angle.

As can be seen from the above description, when the first slider 52 moves from the vertex of the first sliding slot 42 in the forward direction (i.e., the direction A1), the forward movement of the second slider 54 involves first moving in the third direction (i.e., the direction C1) and then moving in the fourth direction (i.e., the direction C2). During the forward movements of the first slider 52 and the second slider 54, the extension direction of the connecting arm 53 is also changed to drive the support plate 3 to move along the predetermined trajectory and enable the flexible screen 2 to be deployed. Similarly, when the first slider 52 moves from the lowest point of the first sliding slot 42 in the reverse direction (i.e., the direction A2), the reverse movement of the second slider 54 involves first moving in the fourth direction (i.e., the direction C2) and then moving in the third direction (i.e., the direction C1). During the reverse movements of the first slider 52 and the second slider 54, the extension direction of the connecting arm 53 is also changed to drive the support plate 3 to move along the predetermined trajectory and enable the flexible screen 2 to be retracted.

In some possible embodiments provided by the present application, the sliding screen assembly 0 includes a second link 6, one end of the second link 6 is hinged to the fixed base 4, and the other end is hinged to the support plate 3. The forward and reverse sliding of the sliding link mechanism 5 and the forward and reverse rotation of the second link 6 drive the support plate 3 to move in the forward and reverse directions, thereby driving the flexible screen 2 to first move along an arc trajectory G11 and then along an approximately linear trajectory G12 when deployed, and the flexible screen 2 to first move along an approximately linear trajectory G22 and then along an arc trajectory G21 when retracted.

The forward sliding of the sliding link mechanism 5 and the forward rotation of the second link 6 drive the support plate 3 to move forward, causing the flexible screen 2 to move first along the arc trajectory G11 as shown in FIG. 6, and then along the approximately linear trajectory G21 as shown in FIG. 6. The reverse sliding of the sliding link mechanism 5 and the reverse rotation of the second link 6 drive the support plate 3 to move in reverse, causing the flexible screen 2 to move first along the approximately linear trajectory G22 as shown in FIG. 6, and then along the arc trajectory G12 as shown in FIG. 6.

In some possible embodiments provided by the present application, referring to FIG. 1, FIG. 3, and FIG. 5, the other end of the first link 51 is hinged to a top of the support plate 3. The other end of the second link 6 is hinged to a bottom of the support plate 3. The first link 51 and the second link 6 are hinged to the top and bottom of the support plate 3 respectively, which helps disperse and bear the load from the support plate and can also effectively transmit force and movement.

In some possible embodiments provided by the present application, a distance of the sliding link mechanism 5 from the first slider 52 to the other end of the first link (i.e., the end hinged to the support plate 3) is greater than a distance from one end of the second link 6 (i.e., the end hinged to the fixed base 4) to the other end (i.e., the end hinged to the support plate 3).

With this design, the sliding link mechanism 5 has a long arm of force, which can generate a large torque at the bottom of the support plate 3, so that only a small force is required to pull and lift the support plate 3 to drive the support plate 3 to move. This torque amplification effect makes the entire sliding screen assembly 0 more lobar-saving when the flexible screen 2 is deployed and retracted.

A difference in lengths of the sliding link mechanism 5 and the second link 6 and the manner in which they are connected to the support plate 3 allow the support plate 3 to move between different angular positions. By sliding the sliding link mechanism 5, the angle between the sliding link mechanism and the support plate 3 hinged thereto can be changed, so that the support plate 3 moves according to the predetermined trajectory and angle.

In some possible embodiments provided by the present application, referring to FIG. 1, FIG. 3 and FIG. 5, there are two sliding link mechanisms 5, and the two sliding link mechanisms 5 are arranged in a first direction. There are two second links 6, and the two second links 6 are arranged in a second direction. The first direction is parallel to the second direction. The two first links 51 are arranged between the two second links 6.

Referring to FIG. 1, FIG. 3, and FIG. 5, the first direction and the second direction are both parallel to a fifth direction (i.e., a direction D shown in the figures). The first direction and the second direction are perpendicular to the front-rear direction shown in FIG. 2 to FIG. 6 (i.e., the direction Q). The first direction and the second direction are perpendicular to a height direction, that is, a height direction shown in the figures (i.e., a direction Z).

In some possible embodiments provided by the present application, the first link 51 and the second link 6 are arc-shaped and protrude in a direction away from the fixed base 4. This design facilitates avoiding complex and limited space in automotive interiors (such as an automobile's centre console).

In some possible embodiments provided by the present application, referring to FIG. 1, FIG. 3, and FIG. 5, the sliding screen assembly 0 includes a first synchronization rod 71 and a second synchronization rod 72. Two ends of the first synchronization rod 71 are connected to the first sliders 52 on the two sliding link mechanisms 5 respectively. Two ends of the second synchronization rod 72 are connected to the second sliders 54 on the two sliding link mechanisms 5 respectively. The first synchronization rod 71 and the second synchronization rod 72 both extend in the fifth direction (i.e., the direction D shown in the figures). The first synchronization rod 71 and the second synchronization rod 72 are arranged in parallel.

In some possible embodiments provided by the present application, referring to FIG. 2, FIG. 4, and FIG. 6, the sliding screen assembly 0 includes a plurality of supporting and guiding rolling elements 8. The plurality of supporting and guiding rolling elements 8 are distributed along part of the motion trajectory of the flexible screen 2, and configured to support the flexible screen 2 and guide the flexible screen 2 to move in the forward and reverse directions.

In this embodiment, the sliding screen assembly 0 includes a supporting platform (not shown in the figure). The plurality of supporting and guiding rolling elements 8 are arranged between the supporting platform and the flexible screen 2. The plurality of supporting and guiding rolling elements 8 are arranged at a junction of an arc trajectory G1 and an approximately linear trajectory G2 of the flexible screen 2, and the plurality of supporting and guiding members 8 are connected to the flexible screen 2 in a rolling manner.

When the support plate 3 drives the free end 21 of the flexible screen 2 to be deployed, the winding unit 1 unwinds the flexible screen 2, and the unwound flexible screen 2 may fit against the plurality of supporting and guiding rolling elements 8. The plurality of supporting and guiding rolling elements 8 roll in place to support the flexible screen 2 to prevent collapse of the flexible screen 2, and an arrangement direction of the plurality of supporting and guiding rolling elements 8 may guide the flexible screen 2 to move along the arc trajectory G11 and the approximately linear trajectory G21. At the hinge between the support plate 3 and the free end 21 of the flexible screen 2, the free end 21 of the flexible screen 2 is pulled by the support plate 3 and moves along the approximately linear trajectory G21, thereby deploying the flexible screen 2.

Likewise, when the support plate 3 drives the free end 21 of the flexible screen 2 to be retracted, the winding unit 1 rewinds the flexible screen 2, and the wound flexible screen 2 may fit against the plurality of supporting and guiding rolling elements 8. The plurality of supporting and guiding rolling elements 8 roll in place to support the flexible screen 2 to prevent collapse of the flexible screen 2, and the arrangement direction of the plurality of supporting and guiding rolling elements 8 may guide the flexible screen 2 to move along the approximately linear trajectory G22 and the arc trajectory G12. At the hinge between the support plate 3 and the free end 21 of the flexible screen 2, the free end 21 of the flexible screen 2 is pulled by the support plate 3 and moves along the approximately linear trajectory G22, thereby retracting the flexible screen 2.

In this embodiment, referring to FIG. 2, FIG. 4, and FIG. 6, the supporting and guiding rolling elements 8 are rollers.

In some possible embodiments provided by the present application, referring to FIG. 1, the sliding screen assembly 0 includes a drive unit 9. The drive unit 9 is connected to the first synchronization rod 71 and is configured to drive the first synchronization rod 71 to move, thereby driving the first slider 52 to slide in the first sliding slot 42 and the second slider 54 to slide in the second sliding slot 43. In this embodiment, the sliding connecting mechanism 5 moving along the predetermined trajectory is achieved through the drive unit 9 and the first synchronization rod 71.

In some possible embodiments provided by the present application, referring to FIG. 1, the drive unit 9 includes a lead screw 91, a lead screw nut 92, and a drive motor 93. One end of the lead screw 91 is hinged to the fixed base 4. The lead screw nut 92 is sleeved on the lead screw 91 and fixedly connected to the first synchronization rod 71. The drive motor 93 is configured to drive the lead screw 91 to rotate. The rotation of the lead screw 91 causes the lead screw nut 92 to move on the lead screw 91, thereby driving the first synchronization rod 71 to move.

In some possible embodiments provided by the present application, referring to FIG. 1, the drive unit 9 includes a rod sleeve 94, which is sleeved on an outer side surface of the first synchronization rod 71 and fixedly connected to the first synchronization rod 71. The rod sleeve 94 is connected to the lead screw nut 92 and can move along with the movement of the lead screw nut 92.

In some other possible embodiments, referring to FIG. 1, the rod sleeve 94 and the lead screw nut 92 are integrally formed. That is, the lead screw nut 92 includes the rod sleeve 94, which is sleeved on the outer side surface of the first synchronization rod 71 and fixedly connected to the first synchronization rod 71. The rod sleeve 94 can move along with the movement of the lead screw nut 92.

In this embodiment, the drive motor 93 is configured to drive the lead screw 91 to rotate. The rotation of the lead screw 91 causes the lead screw nut 92 to move on the lead screw 91, thereby driving the first synchronization rod 71 to move. At the same time, the lead screw 91 is hinged to the fixed base 4, and the lead screw 91 can rotate in the forward direction (i.e., the direction A1 shown in the figures) and the reverse direction (i.e., the direction A2 shown in the figures), so that the first synchronization rod 71 can move in the arc-shaped first sliding slot 42 along the predetermined trajectory.

The sliding screen assembly 0 provided by the present application is ingeniously designed in structure, so that one end of the sliding link mechanism 5 is slidably connected to the fixed base 4, and the other end is hinged to the support plate 3. At the same time, the first sliding slot 42 and the second sliding slot 43 are designed on the sliding panel 41 of the fixed base 4 to limit the sliding link mechanism 5 to slide along the predetermined trajectory, thereby driving the support plate 3 to move, and driving the winding unit 1 to unwind and rewind the flexible screen 2, so that the flexible screen 2 can be deployed and retracted.

In a second aspect, the present application further provides an automotive seat, including the sliding screen assembly 0 according to any one of aforementioned embodiments in the first aspect.

In this embodiment, the automotive seat includes a hidden portion configured to hide the sliding screen assembly 0 according to any one of aforementioned embodiments in the first aspect.

Referring to FIG. 5 to FIG. 7, the hidden portion includes an opening 11, an accommodating cavity 10, and a cover plate (not shown). The sliding screen assembly 0 is accommodated in the accommodating cavity 10, when the flexible screen 2 is deployed, the sliding screen assembly 0 extends from the accommodating cavity 10 through the opening 11, and when the flexible screen 2 is retracted, the sliding screen assembly 0 is retracted into the accommodating cavity 10 through the opening 11. The cover plate is capable of covering and opening the opening 11, thereby making the appearance of the automotive seat neat and beautiful, and also having a dust-proof effect.

In this embodiment, the hidden portion is provided in the automotive seat, and when the sliding screen assembly is not needed, the sliding screen assembly 0 is retracted and hidden, so that the automotive seat is neat and beautiful. When the sliding screen assembly is needed, the sliding screen assembly is deployed to facilitate user use. The sliding screen assembly provided by the present application occupies a small space and does not occupy the upper space, and therefore, it is generally applicable to automotive seats. In addition, by using the sliding screen assembly provided by the present application, there is no need to arrange visible tracks on an exterior surface of the automotive seat, so that the automotive seat features a simple and elegant appearance. The sliding screen assembly also adds a sporty design to the automotive seat, achieving diversity in the automotive seat.

In a third aspect, the present application further provides an automotive sunroof, including the sliding screen assembly 0 according to any one of aforementioned embodiments in the first aspect.

In this embodiment, the automotive sunroof is arranged on a mounting frame of an automobile, and the mounting frame is provided with a hidden portion configured to hide the sliding screen assembly 0 according to any one of aforementioned embodiments in the first aspect.

Referring to FIG. 5 to FIG. 7, the hidden portion includes an opening 11, an accommodating cavity 10, and a cover plate (not shown). The sliding screen assembly 0 is accommodated in the accommodating cavity 10, when the flexible screen 2 is deployed, the sliding screen assembly 0 extends from the accommodating cavity 10 through the opening 11, and when the flexible screen 2 is retracted, the sliding screen assembly 0 is retracted into the accommodating cavity 10 through the opening 11. The cover plate is capable of covering and opening the opening 11, thereby making the appearance of the automotive sunroof neat and beautiful, and also having a dust-proof effect.

In this embodiment, the hidden portion is provided in the mounting frame of the automotive sunroof, and when the sliding screen assembly is not needed, the sliding screen assembly 0 is retracted and hidden, so that the automotive sunroof is neat and beautiful. When the sliding screen assembly is needed, the sliding screen assembly is deployed to facilitate user use. The sliding screen assembly provided by the present application occupies a small space and does not occupy the upper space, and therefore, it is generally applicable to automotive sunroofs. In addition, by using the sliding screen assembly provided by the present application, there is no need to arrange visible tracks on an exterior surface of the automotive sunroof, so that the automotive sunroof features a simple and elegant appearance. The sliding screen assembly also adds a sporty design to the automotive sunroof, achieving diversity in the automotive sunroof.

In a fourth aspect, the present application further provides an automobile, including a hidden portion configured to hide the sliding screen assembly 0 according to any one of aforementioned embodiments in the first aspect.

Referring to FIG. 2, FIG. 4, and FIG. 6, the hidden portion includes an opening 13, an accommodating cavity 12, and a cover plate (not shown). The sliding screen assembly 0 is accommodated in the accommodating cavity 12, when the flexible screen 2 is deployed, the sliding screen assembly 0 extends from the accommodating cavity 12 through the opening 13, and when the flexible screen 2 is retracted, the sliding screen assembly 0 is retracted into the accommodating cavity 12 through the opening 13. The cover plate is capable of covering and opening the opening 13, thereby making the appearance of the automobile neat and beautiful, and also having a dust-proof effect.

In this embodiment, the hidden portion is provided in the automobile, and when the sliding screen assembly is not needed, the sliding screen assembly 0 is retracted and hidden, so that the automobile is neat and beautiful. When the sliding screen assembly is needed, the sliding screen assembly is deployed to facilitate user use. The sliding screen assembly provided by the present application occupies a small space and does not occupy the upper space, and therefore, it is generally applicable to automobiles. In addition, by using the sliding screen assembly provided by the present application, there is no need to arrange visible tracks on an exterior surface of the automobile, so that the automobile features a simple and elegant appearance. The sliding screen assembly also adds a sporty design to the automobile, achieving diversity in the automobile.

In this embodiment, the hidden portion can be provided at any position of the automobile, such as the interior of the automobile or the exterior of the automobile body. The automobile interior is at least one of centre console, dashboard, and ceiling of the automobile. The exterior of the automobile body is, for example, the hidden portion outside a door.

Exemplarily, the hidden portion is provided on a dashboard (automobile interior). The fixed base 4 in the sliding screen assembly 0 is fixed on the dashboard or a pipe beam. The flexible screen 2 is hidden in the dashboard through the winding unit 1.

Referring to FIG. 2, FIG. 4, and FIG. 6, a dashboard region includes a decorative component 10 and a baffle 11. The decorative component 10 and the baffle 11 define an accommodating cavity 12 for accommodating the sliding screen assembly 0. The baffle 11 is a front baffle configured to shield the sliding screen assembly 0 to prevent the sliding screen assembly 0 from being directly seen from the front.

Although the present application has been illustrated and described with reference to certain preferred implementations of the present application, those of ordinary skill in the art should understand that the above content is a further detailed description of the present application in conjunction with specific implementations, and it cannot be determined that the specific implementation of the present application is limited to these descriptions. Those skilled in the art can make various changes in form and details, including making several simple deductions or substitutions, without departing from the spirit and scope of the present application.

## Claims

1. A sliding screen assembly, **characterized in** comprising:
a winding unit;
a flexible screen wound on the winding unit, the flexible screen being provided with a free end;
a support plate hinged to the free end, the support plate being configured to support the flexible screen unwound by the winding unit;
a fixed base; and
a sliding link mechanism having one end slidably connected to the fixed base and the other end hinged to the support plate;
where the sliding link mechanism slides in forward and reverse directions to drive the support plate to move in the forward and reverse directions, thereby driving the winding unit to unwind and rewind the flexible screen, so that the flexible screen is deployed and retracted.

2. The sliding screen assembly according to claim 1, **characterized in that**,
the fixed base comprises a sliding panel, and the sliding panel is provided with a first sliding slot and a second sliding slot;
the sliding link mechanism comprises a link part and a sliding part, the link part comprises a first link, the sliding part comprises a first slider, a connecting arm, and a second slider, wherein two ends of the connecting arm are fixedly connected to the first slider and the second slider respectively; one end of the first link is fixedly connected to the second slider, and the other end of the first link is hinged to the support plate; the first slider is located in the first sliding slot and slidable along the first sliding slot, and the second slider is located in the second sliding slot and slidable along the second sliding slot, and through forward and reverse sliding of the first slider in the first sliding slot and the second slider in the second sliding slot, the first link drives the support plate to move in the forward and reverse directions.

3. The sliding screen assembly according to claim 2, **characterized in that** the first sliding slot is arc-shaped and recessed forward,
the second sliding slot is located behind the first sliding slot and is in the shape of an oblique line, and an included angle formed by a direction from bottom to top of the second sliding slot and a direction from rear to front of the sliding screen assembly is an acute angle.

4. The sliding screen assembly according to claim 2 or 3, **characterized in** comprising a second link, the second link having one end hinged to the fixed base and the other end hinged to the support plate;
wherein the forward and reverse sliding of the sliding link mechanism and forward and reverse rotation of the second link drive the support plate to move in the forward and reverse directions, thereby driving the flexible screen to first move along an arc trajectory and then along an approximately linear trajectory when deployed, and the flexible screen to first move along an approximately linear trajectory and then along an arc trajectory when retracted.

5. The sliding screen assembly according to claim 4, **characterized in that** the other end of the first link is hinged to a top of the support plate; and the other end of the second link is hinged to a bottom of the support plate.

6. The sliding screen assembly according to claim 4, **characterized in that** there are two sliding link mechanisms, and the two sliding link mechanisms are arranged in a first direction; there are two second links, and the two second links are arranged in a second direction; the first direction is parallel to the second direction; and the two first links are arranged between the two second links.

7. The sliding screen assembly according to claim 4, **characterized in that** the first link and the second link are arc-shaped and protrude in a direction away from the fixed base.

8. The sliding screen assembly according to claim 6, **characterized in** comprising:
a first synchronization rod, wherein two ends of the first synchronization rod are connected to the first sliders on the two sliding link mechanisms respectively; and
a second synchronization rod, wherein two ends of the second synchronization rod are connected to the second sliders on the two sliding link mechanisms respectively.

9. The sliding screen assembly according to claim 4, **characterized in** comprising:
a plurality of supporting and guiding rolling elements distributed along part of the motion trajectory of the flexible screen, and configured to support the flexible screen and guide the flexible screen to move in the forward and reverse directions.

10. The sliding screen assembly according to claim 8, **characterized in** comprising a drive unit, wherein the drive unit is connected to the first synchronization rod and is configured to drive the first synchronization rod to move, thereby driving the first slider to slide in the first sliding slot and the second slider to slide in the second sliding slot.

11. The sliding screen assembly according to claim 10, **characterized in that** the drive unit comprises:
a lead screw, one end of the lead screw being hinged to the fixed base;
a lead screw nut sleeved on the lead screw and fixedly connected to the first synchronization rod; and
a drive motor configured to drive the lead screw to rotate;
wherein the rotation of the lead screw causes the lead screw nut to move on the lead screw, thereby driving the first synchronization rod to move.

12. An automotive seat, **characterized in** comprising the sliding screen assembly according to any one of claims 1 to 11.

13. An automotive sunroof, **characterized in** comprising the sliding screen assembly according to any one of claims 1 to 11.

14. An automobile, **characterized in** comprising a hidden portion configured to hide the sliding screen assembly according to any one of claims 1 to 11;
wherein the hidden portion comprises:
an opening;
an accommodating cavity, wherein the sliding screen assembly is accommodated in the accommodating cavity, when the flexible screen is deployed, the sliding screen assembly extends from the accommodating cavity through the opening, and when the flexible screen is retracted, the sliding screen assembly is retracted into the accommodating cavity through the opening; and
a cover plate capable of covering and opening the opening.
